# EUROPEAN PATENT SPECIFICATION

(11) **EP 0 323 910 B1**
(45) Date of publication and mention of the grant of the patent: **20.10.1993**
(21) Application number: 89300103.2
(22) Date of filing: 06.01.1989
(51) Int. Cl.: G11B 27/10, G11B 15/02, G11B 27/30

(54) **Search methods for recording media**
Suchverfahren für Aufzeichnungsmedien
Méthodes de recherche pour milieux d'enregistrement

(30) Priority: 08.01.1988 GB 8800352
(43) Date of publication of application: 12.07.1989
(73) Proprietor: Hewlett-Packard Limited, Wokingham, Berkshire RG11 3LL (GB); SONY CORPORATION, Tokyo 141 (JP)
(72) Inventor: Inazawa, Yoshizumi c/o Patents Division, Shinagawa-ku Tokyo 141 (JP); Milthorp, Brian c/o Hewlett-Packard Limited, Berkshire RG11 3LL (GB); Thompson, Bruce c/o Hewlett-Packard Limited, Berkshire RG11 3LL (GB)
(74) Representative: Pilch, Adam John Michael

(56) References cited:
- EP-A- 0 173 474
- DE-A- 3 135 397
- GB-A- 2 013 935

## Description

This invention relates to search methods for recording media and to apparatus and methods for recording and/or reproducing digital signals.

Data stored on a hard disc or the like of a computer can be transferred to and recorded by a data streamer or data recorder once a day, so as to protect or back up the data. For this operation, analog audio tape recorders have been used in certain cases. However, analog tape recorders have disadvantages in that they need a considerable amount of magnetic tape for recording, and they operate at a relatively low data transferring rate upon recording, so that it takes a long time to transfer and record such data information. Moreover, analog tape recorders have further problems, for example the starting point of a desired portion of the recorded data information cannot be rapidly searched for.

Thus, to overcome the above-mentioned problems, it has been proposed to utilise a helical-scan type digital audio tape recorder (DAT) using a rotary head as a data recorder. Such data recorders utilising a DAT are described in European Patent Applications Serial Nos. EP-A-0 272 130, EP-A-0 286 412, EP-A-0 297 809 and EP-A-0 300 732.

To utilise a DAT as a data recorder, data transferred from a host computer is transformed in accordance with a DAT format before recording. In the DAT format, one frame is made up of two oblique tracks formed by one rotation of two heads having different azimuth angles. 16-bit pulse code modulation (PCM) audio data, which has been interleaved, and auxiliary sub-data are recorded in this one frame area as a unit. During recording, there are formed in each track a main area for recording the PCM data and a sub-area for recording the sub-data.

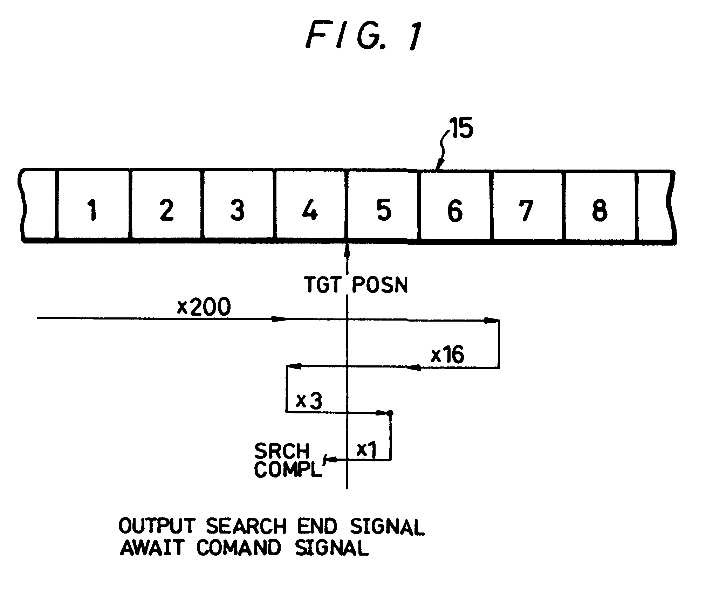

The DAT has a high-speed search function. The high-speed search operation in the previously-proposed DAT is performed by the method shown in Figure 1 of the accompanying drawings.

In Figure 1, when a target position of a magnetic tape 15 on which positions signals "1", "2", "3", ... are recorded is designated, for example, as "4" in performing a search operation, a position detection signal is detected while driving the tape 15 typically at 200-times normal playback speed. When the target position "4" is detected, a stop signal is supplied, and the tape 15 passes by the target position and is then stopped. The tape 15 then travels in the reverse direction typically at 16-times normal speed, and when the target position is detected, a stop signal is supplied. In this case, the tape 15 passes by the target position in the reverse direction and is again stopped. The tape 15 is again reversed in direction and travels at 3-times the normal speed. When the target position is detected, the stop signal is supplied. The tape 15 is once again reversed and travels in the reverse direction at the normal speed. When the target position is detected and the stop signal is supplied, the tape 15 slightly passes by the target position, and is then stopped. In this case, a search end signal is generated, and the next command signal is awaited. When the command signal is supplied in this waiting state, the magnetic tape 15 travels in the opposite direction at the normal speed, and the target position "4" is accurately detected.

European Patent Application Serial No. EP-A-0 173 474 discloses a high-speed search operation similar to that described above, in which the tape drive direction is changed and the speed reduced each time the target position is detected. UK Patent Application Serial No. GB-A-2 013 935 discloses a record carrier provided with addresses in the form of code pulses and sync pulses. Forward or reverse high-speed search is possible by entering the desired address in an address memory, the search operation proceeding in a similar manner to that described above.

In the previously-proposed high-speed search operation, since the tape is kept stopped after the search end signal is generated until the next command signal is supplied, there is a time delay, thus impairing the efficiency of the search operation.

In accordance with one aspect of this invention there is provided a search method for use with a recording medium on which a plurality of position signals are recorded at intervals, the method comprising the steps of:
a) driving the recording medium initially in one direction while detecting the recorded position signals from a position which is fixed relative to the recording medium;
b) reversing the driving direction of the recording medium after a predetermined recorded position signal has been detected;
c) decreasing the speed of the recording medium and driving the recording medium at the decreased speed until the predetermined recorded position signal is detected again;
d) repeating the foregoing steps b) and c) a predetermined number of times so as to detect a target position on the recording medium; and
after detecting that the target position has been passed during the final one of the predetermined number of the foregoing steps, generating a report signal indicating that the target position has been searched;
characterised in that the report signal is generated while the recording medium is still moving during the final detecting step such that the recording medium is stopped if no command signal is received within a predetermined time after the report signal has been generated.

In accordance with another aspect of this invention there is provided apparatus for searching a recording medium on which a plurality of position signals are recorded at intervals, the apparatus comprising:
drive means for driving the recording medium;
detecting means for detecting the recorded position signals; and
control means for controlling the drive means in response to the detecting means, the control means being operable to cause the drive means to:
a) drive the recording medium initially in one direction while the recorded position signals are detected from a position which is fixed relative to the recording medium;
b) reverse the driving direction of the recording medium after a predetermined recorded position signal has been detected;
c) decrease the speed of the recording medium and drive the recording medium at the decreased speed until the predetermined recorded position signal is detected again;
d) repeat the foregoing steps b) and c) a predetermined number of times so as to detect a target position on the recording medium; and
after detecting that the target position has been passed during the final one of the predetermined number of the foregoing steps, generate a report signal indicating that the target position has been searched;
characterised in that the report signal is generated while the recording medium is still moving during the final detecting step such that the recording medium is stopped if no command signal is received within a predetermined time after the report signal has been generated.

A preferred embodiment of the present invention, to be described in greater detail hereinafter, provides a search method for a recording medium, which is capable of performing a search operation without wasting time.

In carrying out this data search method, a target count value and a count value reproduced from the recording medium are preferably compared with each other, the direction and speed of the recording medium are controlled in accordance with the comparison output, and when the count value reproduced from the recording medium comes close to the target count value, the report signal is generated after detecting a division of the unit count signal.

The invention will now be described by way of example with reference to the accompanying drawings, throughout which like parts are referred to by like references, and in which:
Figure 1 is a schematic view showing a previously-proposed search method;
Figure 2 is a block diagram showing an embodiment of the present invention;
Figure 3 is a schematic view showing a DAT format;
Figure 4 is a view showing a data format of a main data block;
Figure 5 is a view showing a data format of a main area for one frame;
Figures 6A and 6B are depictions of the data formats of even and odd numbered sub-code blocks, respectively;
Figures 7 and 8 are views showing data formats of packs in the sub-code block;
Figure 9 is a view showing the relationship between groups and save sets;
Figure 10A shows an example of the indications of various counts for various groups of 23 frames;
Figure 10B is an illustration showing a forward tape direction search method;
Figure 10C is an illustration showing a reverse tape direction search method; and
Figures 11A and 11B together constitute a flow chart showing a search sequence.

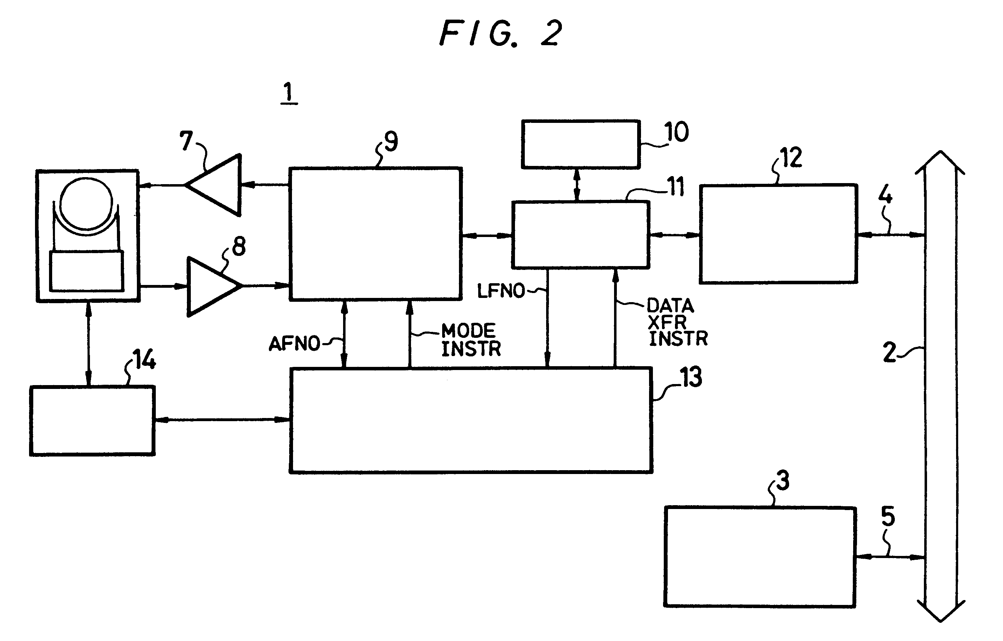

Figure 2 shows an arrangement in which a DAT 1 is used as a data recorder, the arrangement also including an interface bus 2, a host computer 3, and inner buses 4, 5. The DAT 1 includes a recording/reproducing section 6, a recording amplifier 7, a reproducing amplifier 8, a signal processing circuit 9, a random access memory (RAM) 10, a data controller 11, an interface board 12, a system controller 13 and a servo and motor drive circuit 14.

The system controller 13, the signal processing circuit 9 and the data controller 11 are arranged to exchange predetermined signals such as an absolute frame number AFNO, a mode instruction, a logical frame number LFNO, a data transfer instruction and the like.

Although this is not shown, the recording/reproducing section 6 is provided with a rotary head drum. A magnetic tape is wound around the drum over an angular range of about 90° and is fed by a capstan. The drum has two heads A and B having different azimuth angles. During one revolution of the drum, two oblique tracks are recorded on or reproduced from the tape.

Digital data supplied from the host computer 3 through the buses 5, 2 and 4 is input to the interface board 12, and is then subjected to predetermined signal processing in the data controller 11, the RAM 10, and the signal processing circuit 9 in accordance with instructions from the system controller 13. In this manner, conversion to the DAT format (described above) is performed. The converted signal is supplied to the recording/reproducing section 6 through the recording amplifier 7, and is recorded on the magnetic tape by the heads A and B.

The signal recorded on the magnetic tape can also be reproduced by the heads A and B. The reproduced signal is supplied to the signal processing circuit 9 through the reproducing amplifier 8. Digital data which is obtained by reconverting the reproduced signal in the signal processing circuit 9 is supplied to the host computer 3 through the data controller 11, the interface board 12 and the buses 4, 2 and 5.

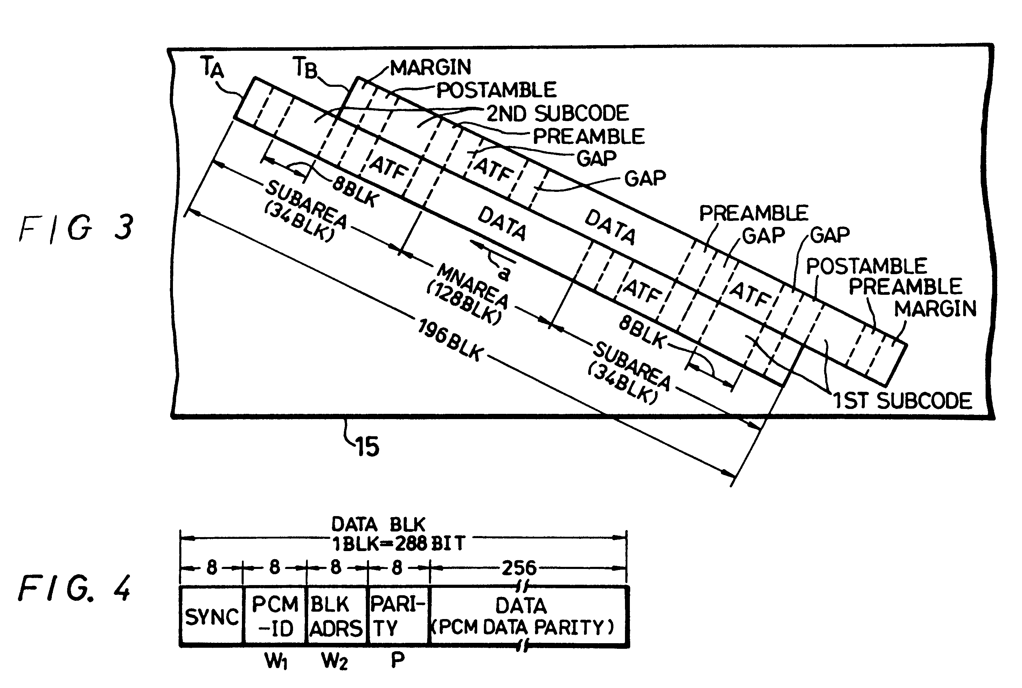

In the above apparatus, the DAT format which is used on the magnetic tape is as shown in Figure 3. During one revolution of the heads A and B, two oblique tracks TA and TB are formed on a tape 15 starting from its lower side, as indicated by an arrow a.

The two tracks TA and TB constitute one frame. Each of the tracks TA and TB consists of 196 blocks, and one block consists of 288 bits. 34 blocks at each end portion serve as a sub area, and 128 central blocks serve as a main area.

Each sub area is further divided into sections. More specifically, there are provided, from the lower end of the track, a margin section, a phase lock loop (PLL) preamble section of a sub code, a first sub-code section constituted of 8 blocks, a postamble section, a gap section for a block section, a tracking (ATF) signal section, a gap section between adjacent blocks, and a PLL preamble of data. Then, after the main data section there follows a gap section between adjacent blocks, an ATF signal section, a gap section between adjacent blocks, a PLL preamble section of a sub code, a second sub-code section constituted by 8 blocks, a postamble second sub-code section, and a margin section. The other blocks are constituted by respective predetermined numbers of blocks. It should be noted that in Figure 3, the measure of the lengths of the sections is not to scale.

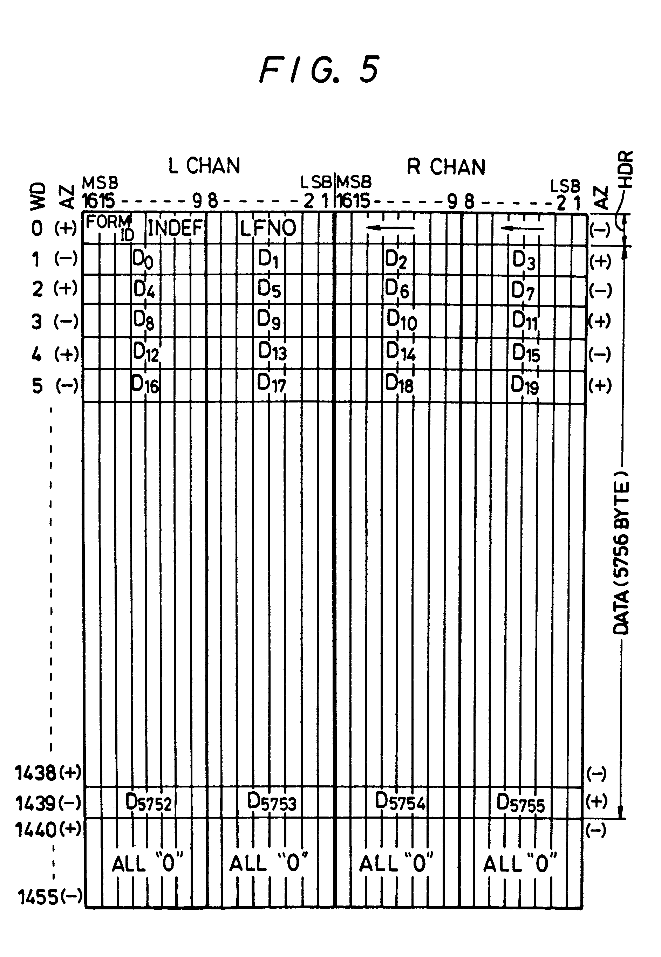

The main area consists of 128 data blocks. As shown in Figure 4, each block is constituted by an 8-bit synchronising (sync) signal, an 8-bit pulse code modulation identification (PCM-ID) signal W1, an 8-bit block address W2 and an 8-bit parity, and main data is stored in the following 256-bit section. The main data is 16-bit PCM data for left L and right R channels when an audio signal is processed. The 16-bit main data is interleaved in the main areas of the tracks TA and TB (one frame) together with the parity. In this case, in the main areas in one frame, about 5760 bytes of data are recorded. When the DAT is used as a data recorder, the data sent from the host computer 3 is converted into 16-bit data and is processed in the same manner as the PCM data. This data is formatted as shown in Figure 5 and is recorded in the main areas comprising one frame.

More specifically, in Figure 5, the above-mentioned 5760 bytes are divided into 1440 words (0 to 1439), each consisting of 4 bytes (32 bits). These words are divided into 16-bit (2-byte) L and R channels to correspond to the audio signal. In this format, a header portion is provided in the first word (4 bytes). Four bits near the most significant bit (MSB) of the first half byte in the L channel in this header portion serve as a format ID indicating a format of the data recorder, and the remaining 4 bits of this byte are indefinite. The remaining one byte in this L channel is used as a logical frame number (LFNO) area. Each 8-bit LFNO area provides a binary value indicating one of a series of numbers (1 to 23) of frames. The frames are organised in units or groups of 23 frames. In the R channel in the header portion, the same data as that in the L channel is provided.

A total of 5756 bytes of a data portion is provided in the following words "1" to "1439", and data signals from the host computer 3 are sequentially stored in respective words in units of 4 bytes each.

The logical frame number LFNO will now be described. Each LFNO area indicates one of the serial numbers 1 to 23 of the frames in units of 23 frames. That is, the frame numbers 1 to 23 repeatedly appear every 23 frames.

By designating a unit numbered by such LFNOs, the divisions for each predetermined amount of data can be easily detected, and signal processing and high-speed searching can be facilitated.

The data formats in the first and second sub-code sections in the sub area will now be described. Each of the first and second sub-code sections consists of 8 sub-code blocks, and can record 2048 bits of data.

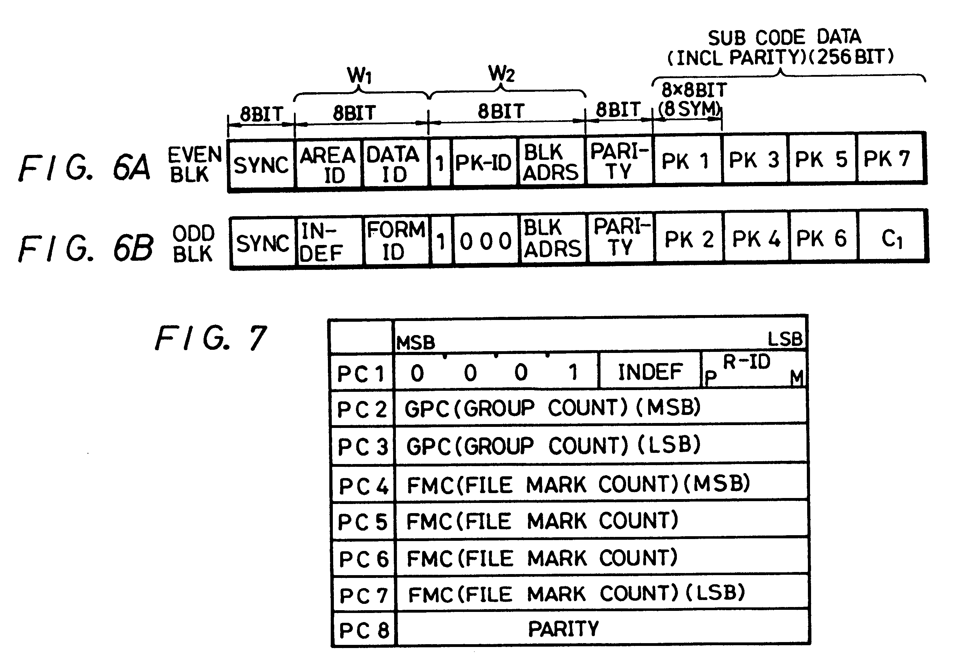

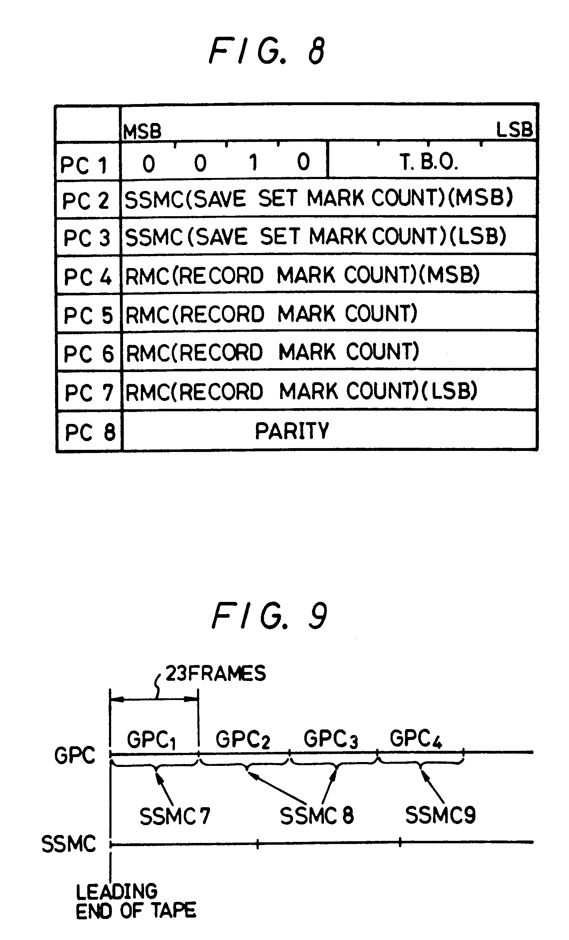

Figures 6A and 6B show, respectively, the constructions of the even-numbered sub-code blocks (EVEN blocks) and the odd-numbered sub-code blocks (ODD blocks), in each of which a synchronising signal, the areas W1 and W2 and a parity, respectively formed of eight bits, and 256 bits of sub-code data including a parity, are located in this order. The sub-code data is divided into four packs formed of 64 (8 x 8) bits (eight symbols), respectively.

As shown in Figures 6A and 6B, the contents of the areas W1 and W2 in the EVEN block are different from those in the ODD block, and the packs in the EVEN and ODD blocks are alternately numbered from "1" to "7". The eighth pack is assigned to record an error detecting code C1.

The area W1 of the EVEN block consists of a 4-bit area ID and a 4-bit data ID, and the area W2 thereof consists of an upper bit "1", a 3-bit pack ID, and a 4-bit block address. The area W1 in the ODD block consists of a 4-bit indefinite portion, and a 4-bit format ID, and the area W2 thereof consists of an upper bit "1", a 3-bit all "0" code, and a 4-bit block address.

Each of the packs "1" to "7" is divided into 8 words in units of 8 bits. Each word includes, together with a parity, various codes such as a code indicating a read-in area of a recording start portion on a tape, a code indicating a read-out area of a recording end portion, a code indicating a recording date, an absolute frame number, a logical frame number and the like.

Figure 7 shows the format of the pack "1" of the seven packs, and Figure B shows the format of the pack "2".

Referring to Figure 7, the pack "1" consists of eight 8-bit words, PC1 to PC8. The upper four bits of the word PC1 are assigned to a pack number (in this case, "0001" indicating pack "1"), and the next 2 bits are indefinite. The following lower two bits (P,M) provide a repeat ID (R-ID) associated with multiple writing of data for a plurality of units. The following words PC2 and PC3 (16 bits) are assigned to a group count GPC. The group count GPC is a value obtained by counting the number of units of 23 frames (called groups hereinafter) from the leading end of a tape.

The following words PC4 to PC7 (32 bits) are assigned to a file mark count FMC. A file mark indicates a division of a predetermined amount of data sent from the host computer. The file mark count FMC is a value obtained by counting the number of file marks from the leading end of the tape until counting of the count GPC is completed for the group of 23 frames. The word PC 8 is assigned to a parity for the words PC1 to PC7.

In Figure 8, the pack "2" consists of 8 words PC1 to PC8. The upper 4 bits of the word PC1 are assigned to a pack number (in this case, "0010" indicating the pack "2"). The words PC2 and PC3 (16 bits) are assigned to a save set mark count SSMC. Data recorded by the data recorder during one back-up operation is called a save set, and a save set mark is sent from the host computer for each save set. The save set mark count SSMC indicates a value obtained by counting the number of save set marks from the leading end of the tape until counting of the count GPC is completed for each group of 23 frames. The following words PC4 to PC7 (32 bits) are assigned to a record mark count RMC. A record mark is a mark sent from the host computer for each division of the predetermined amount of data. The record mark count RMC indicates a value obtained by counting the number of record marks from the leading end of the tape until counting of the count GPC is completed for each group of 23 frames. The word PC8 is assigned to a parity for the words PC1 to PC7.

In this embodiment, as described above, the packs "1" and "2" provide four count values GPC, FMC, SSMC, and RMC respectively indicating divisions of data. In other words, these count values represent four types of units. These units are not particularly associated with data lengths (recording lengths on a tape), and have predetermined independent lengths. The counts FMC, SSMC, and RMC are represented in association with the count GPC.

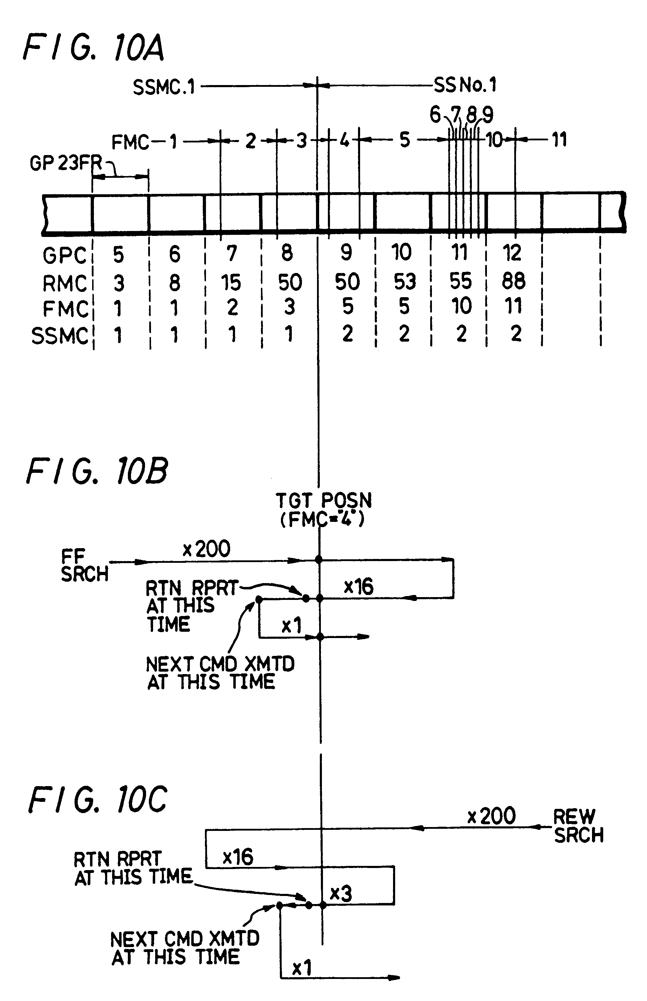

Figure 9 shows the relationship between the counts GPC and SSMC. The number of save set marks from the leading end of the tape until each time when a group of 23 frames is completed is recorded as the count SSMC in each of the 23 frames constituting the group including the timing. In the case of Figure 9, when the counting of the group GPC 1 is completed, since seven save set marks are counted, SSMC 7 is recorded in each of the 23 frames of the group of GPC 1. The same set of SSMC 8 extends over two groups of GPC 2 and GPC 3. Therefore, counts SSMC 8 are recorded in each of the 46 frames of these groups. The relationships between the other counts FMC and RMC and the count GPC are also determined in the same manner as in Figure 9. Figure 10A shows examples of the indications of the counts GPC, FMC, SSMC, and RMC for the respective groups.

Therefore, the above-mentioned counts GPC, FMC, SSMC, and RMC can be selectively detected, so that a high-speed search operation can be performed effectively.

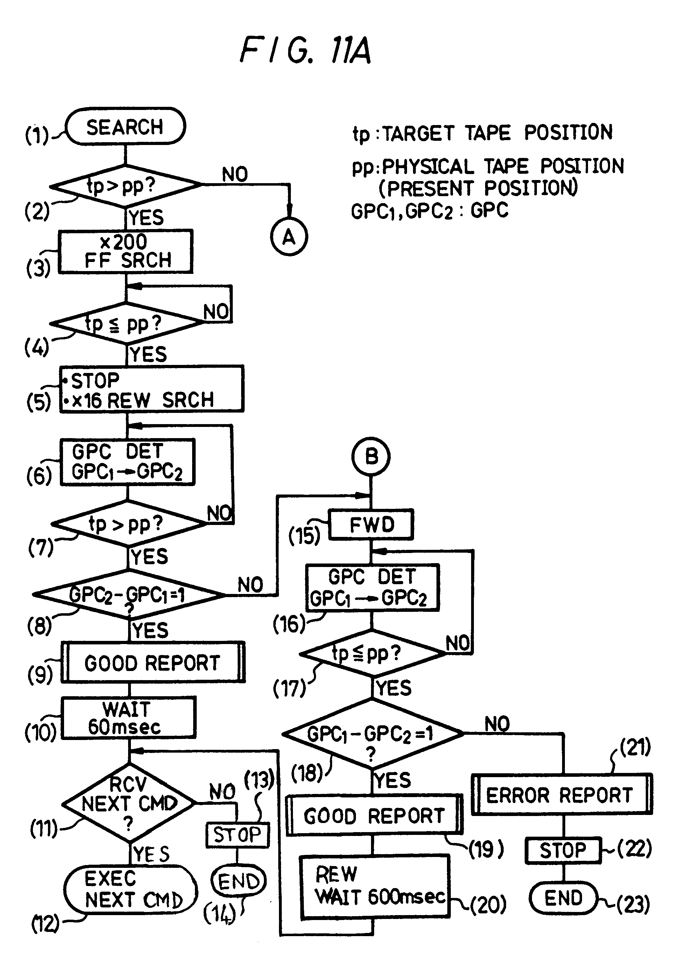

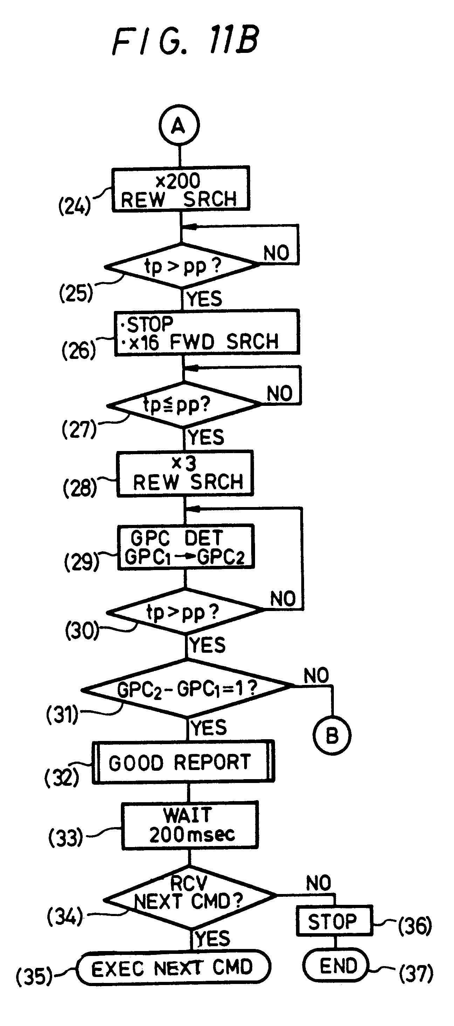

A detailed description of the method of the high-speed search operation carried out by the system controller 13 will now be given with reference to Figures 10B, 10C, 11A and 11B. The target position is given as FMC = 4, and in order to detect the target position, the count GPC is used firstly to detect a boundary point between GPC8 and GPC9.

The high-speed search operation includes a fast forward (FF) search mode as shown in Figure 10B in which the search operation is performed while fast-forwarding the tape typically at 200-times normal playback speed in a normal or forward (FWD) direction. After the target position (TGT POSN) is detected, a rewind (REW) search mode ensues in which the search operation is performed while rewinding the tape in the reverse (REW) direction typically at 16-times normal speed. Shortly after passing back over the target position, a report is returned to the computer that the target position has been detected. In this example, the computer instructs the DAT to forward the tape at normal speed.

Figure 10C shows the case in which a REW search mode is executed. The count FMC = 4 is detected while rewinding the tape at 200-times normal speed. The rewinding operation is performed until it is detected that the tape has passed by the target position. Thereafter, a stop signal is sent to the tape drive system as well as a signal for driving the tape at 16-times normal speed in the forward direction. Thus, the tape has passed by the target position and stopped, and is then reversed to travel at 16-times normal forward speed while detecting the FMC. The 16-times normal speed operation is continued until it is again determined that the tape has passed by the target position. Then the tape travel direction is reversed and the tape travels at 3-times normal reverse speed until it is determined that the tape has passed by the target position. The host computer is informed by the DAT through the bus line that the target position has been detected. After a 200-msec standby time has passed, the next command signal is awaited. When the next command signal is received, the FMC is detected while feeding the tape at the normal speed to detect the target position "4".

Figures 11A and 11B are a flow chart of the steps taken by the system controller when the FF and REW search modes are executed. A reference symbol tp indicates a target position represented by the FMC, and a symbol pp represents a present position on the tape represented by the FMC. A reference symbol GPC1 denotes a present GPC, and GPC2 represents an immediately preceding GPC. Therefore, during transport of the tape, the present GPC1 serves as the GPC2 when the next GPC1 is detected.

In Figures 10B and 11A, after a high-speed search routine is started in a step (1), it is checked whether tp > pp in a step (2), namely whether the present position is located before or after the target position. If tp > pp, then the present position is located before the target position, and the FF search mode is executed in a step (3) and in subsequent steps. If tp ≦ pp, then the present position is located after the target position, and the REW search mode is executed in a step (24) (Figure 11B) and in subsequent steps.

In the FF search mode, the count FMC is detected while fast-forwarding the tape at 200-times normal speed. The fast-forwarding operation is performed until it is detected in a step (4) that tp ≦ pp, indicating that the tape has arrived at the target position or has passed by the target position. If the determination is YES in the step (4), a stop signal is sent to the tape drive system in a step (5) as well as a signal for driving the tape at 16-times normal speed in the opposite direction. Thus, the tape has passed by the target position and stopped, and is then reversed, so that it travels at 16-times normal speed while detecting the FMC. In a step (6), as the tape is travelling, the GPCs are detected and sequentially set to be GPC1 and GPC2. The 16-times normal speed travel is performed until tp > pp in a step (7), namely until it is determined that the target position has been passed again. If the determination is YES in the step (7), it is checked in a step (8) if $\text{GPC2 - GPC1 = 1}$ 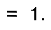 . If $\text{GPC2 - GPC1 = 1}$ immediately after tp > pp is established in the step (8), then GPC2 = 9 and GPC1 = 8 (see Figure 10A), and it is assumed that the tape has reached the target position. In a step (9), the host computer is informed by the sending of a "Good Report" signal through the bus line that the target position has been detected. After a 60-msec standby time has passed in a step (10), the next command signal is awaited in a step (11). When the next command signal is received in the step (11), an operation is performed in accordance with the command signal in a step (12). In this operation, the FMC is detected while forwarding the tape at normal speed to search the target position "4". If no command signal is supplied in the step (11), the tape is stopped in a step (13), and the routine is ended in a step (14).

If $\text{GPC2 - GPC1 ≠ 1}$ is established in the step (8) due to dropout of data or the like, the flow advances to a step (15) to forward the tape, and the GPC is detected in a step (16). The step (16) is repeated until tp ≧ pp in a step (17), namely until the tape has passed by the target position again. If tp ≧ pp is established, it is checked in a step (18) if $\text{GPC1 - GPC2 = 1}$ . If the determination is YES in the step (18), it is determined that the target position is detected, and the host computer is informed of this fact in a step (19). In a step (20), the tape direction is reversed, and after 600 msec have passed, the flow advances to a step (11). If $\text{GPC1 - GPC2 ≠ 1}$ 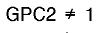 is established in the step (18), an error report is provided in a step (21), the tape is stopped in a step (22), and the routine is ended in a step (23).

If the determination is NO in the step (2), the REW search mode is executed (Figure 11B). In the step (24), the count FMC is detected while rewinding the tape at 200-times normal speed. The rewinding operation is performed until tp > pp is established in a step (25) to determine that the tape has passed by the target position. If the determination is YES in the step (25), a stop signal is sent to the tape drive system in a step (26) as well as a signal for driving the tape at 16-times normal speed in the opposite direction. Thus, the tape has passed by the target position and stopped, and is then reversed to travel at 16-times normal speed while detecting the FMC. The 16-times normal speed operation is continued until tp < pp in a step (27), that is, until it is again determined that the tape has passed by the target position. If the determination YES is obtained in the step (27), the tape travel direction is reversed in a step (28), and the tape travels at 3-times normal speed. In a step (29), the GPCs are detected and sequentially set to be GPC1 and GPC2. The 3-times normal speed operation is continued until tp > pp is established in a step (30), namely until it is determined that the tape has passed by the target position. If the determination is YES in the step (30), it is checked in a step (31) if $\text{GPC2 - GPC1 = 1}$ 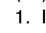 . If $\text{GPC2 - GPC1 = 1}$ in the step (31) immediately after tp > pp is established in the step (30), then GPC2 = 9 and GPC1 = 8 and it is assumed that the target position has been reached. In a step (32), the host computer is informed by the sending of a "Good Report" signal through the bus line that the target position has been detected. After a 200-msec standby time has passed in a step (33), the next command signal is awaited in a step (34). If the next command signal is received, an operation corresponding to the command signal is executed in a step (35). In this operation, the FMC is detected while driving the tape at normal speed to detect the target position "FMC = 4". If no command signal is received in the step (34), the tape is stopped in a step (36), and the routine is ended in a step (37).

If GPC2 - GPC1 ≠ 1 is established in the step (31) due to dropout of data or the like, the flow enters the routine after the step (15), and the operation described above with reference to Figure 11A is executed.

As described above, immediately after it has been determined that the target position is detected in the step (8) in the FF search mode or in the step (31) in the REW search mode, a "good report" is transmitted to the host computer in the steps (9) and (32) so that the next command can be received early while the tape is being driven. Therefore, no time is wasted and the search time can be shortened. In this embodiment, the counts GPC and FMC are used as position signals of the recording medium. However, the search operation can alternatively be performed using the above-mentioned counts SSMC and RMC, as a matter of course.

In summary, according to the previously-proposed data search method illustrated in Figure 1, if a target position is set, for example, FMC = 4, then during the search after the tape has been driven at fast forward, fast rewind, forward, rewind, and so on, and then stopped at the target position FMC = 4, a search end signal is transmitted. This search method requires two time periods, namely a long period of time until the search end and also a time period waiting for the next operation command. In other words, there are required a time during which the tape is stopped, and also a rising-up time when the tape is stopped and then accelerated to its predetermined speed.

On the other hand, according to this embodiment of the present invention, when the target position FMC = 4 is searched for, before the tape is stopped at the target position, a Good Report signal indicating that the target position has been detected is supplied to the host computer. That is, in practice, in the high speed search mode, the target position FMC = 4 is detected and the speed is changed to 16-times normal speed.

When the boundary of the group including FMC = 4 is detected by comparing the difference of two successive group counts with one (for example " $\text{GPC2 - GPC1 = 1}$ "), the Good Report signal is fed to the host computer. Thus, the next command from the host computer can be responded to without stopping the tape. A high speed search therefore becomes possible.

## Claims

1. A search method for use with a recording medium (15) on which a plurality of position signals (GPC) are recorded at intervals, the method comprising the steps of:
a) driving the recording medium (15) initially in one direction while detecting the recorded position signals (GPC) from a position which is fixed relative to the recording medium (15);
b) reversing the driving direction of the recording medium (15) after a predetermined recorded position signal has been detected;
c) decreasing the speed of the recording medium (15) and driving the recording medium (15) at the decreased speed until the predetermined recorded position signal is detected again;
d) repeating the foregoing steps b) and c) a predetermined number of times so as to detect a target position on the recording medium (15); and
after detecting that the target position has been passed during the final one of the predetermined number of the foregoing steps, generating a report signal indicating that the target position has been searched;
characterised in that the report signal is generated while the recording medium (15) is still moving during the final detecting step such that the recording medium (15) is stopped if no command signal is received within a predetermined time after the report signal has been generated.

2. A search method according to claim 1, wherein data is recorded in a plurality of units on the recording medium (15) and wherein main data is recorded in a first area in every unit on the recording medium, and a unit count signal and other count signals are recorded in a second area in every unit.

3. A search method according to claim 2, wherein a digital audio tape recorder (1) is used in performing the search, the first area is a pulse code modulation area and the second area is a sub-code area.

4. A search method according to claim 1, claim 2 or claim 3, wherein a target count value and a unit count value reproduced from the recording medium (15) are compared with each other, the direction and the speed of the recording medium are controlled in accordance with the comparison output, and when the count value reproduced from the recording medium becomes close to the target count value, the report signal is generated after detecting a division of the unit count signal.

5. Apparatus for searching a recording medium (15) on which a plurality of position signals (GPC) are recorded at intervals, the apparatus comprising:
drive means (14) for driving the recording medium (15);
detecting means for detecting the recorded position signals (GPC); and
control means (13) for controlling the drive means (14) in response to the detecting means, the control means (13) being operable to cause the drive means to:
a) drive the recording medium (15) initially in one direction while the recorded position signals (GPC) are detected from a position which is fixed relative to the recording medium (15);
b) reverse the driving direction of the recording medium (15) after a predetermined recorded position signal has been detected;
c) decrease the speed of the recording medium (15) and drive the recording medium (15) at the decreased speed until the predetermined recorded position signal is detected again;
d) repeat the foregoing steps b) and c) a predetermined number of times so as to detect a target position on the recording medium (15); and
after detecting that the target position has been passed during the final one of the predetermined number of the foregoing steps, generate a report signal indicating that the target position has been searched;
characterised in that the report signal is generated while the recording medium (15) is still moving during the final detecting step such that the recording medium (15) is stopped if no command signal is received within a predetermined time after the report signal has been generated.

## Patentansprüche

1. Suchverfahren zur Benutzung mit einem Aufzeichnungsmedium (15), auf dem eine Mehrzahl von Positionssignalen (GPC) in Intervallen aufgezeichnet sind, welches die Verfahrensschritte aufweist:
a) Bewegen des Aufzeichnungsmediums (15) anfänglich in eine Richtung unter Erfassen der aufgezeichneten Positionssignale (GPC) von einer relativ zum Aufzeichnungsmedium (15) festen Position;
b) Umkehren der Bewegungsrichtung des Aufzeichnungsmediums (15), nachdem ein vorbestimmtes aufgezeichnetes Positionssignal erfaßt wurde;
c) Verringern der Geschwindigkeit des Aufzeichnungsmediums (15) und Bewegen des Aufzeichnungsmediums (15) mit der verringerten Geschwindigkeit, bis das vorbestimmte aufgezeichnete Positionssignal wieder erfaßt wird;
d) Wiederholen der vorangegangenen Schritte b) und c) mit einer vorbestimmten Anzahl von Wiederholungen, um so eine Zielposition auf dem Aufzeichnungsmedium (15) zu erfassen, und,
nachdem erfaßt wurde, daß die Zielposition während des letzten der vorbestimmten Anzahl der vorangegangenen Schritte passiert wurde Erzeugen eines Mitteilungssignals, das anzeigt, daß die Zielposition aufgesucht worden ist,
*dadurch **gekennzeichnet,*** daß
das Mitteilungssignal erzeugt wird, während das Aufzeichnungsmedium (15) sich noch während des letzten Erfassungsschritts bewegt, so daß das Aufzeichnungsmedium (15) angehalten wird, wenn kein Befehlssignal innerhalb einer vorbestimmten Zeitspanne, nachdem das Mitteilungssignal erzeugt wurde, empfangen wird.

2. Suchverfahren nach Anspruch 1, wobei die Daten in mehreren Einheiten auf dem Aufzeichnungsmedium (15) aufgezeichnet sind und wobei die Hauptdaten in einem ersten Bereich in jeder Einheit auf dem Aufzeichnungsmedium aufgezeichnet sind und ein Einheitszählsignal und andere Zählsignale in einem zweiten Bereich in jeder Einheit aufgezeichnet sind.

3. Suchverfahren nach Anspruch 2, wobei ein digitaler Audio-Bandrekorder (1) zur Ausführung der Suche benutzt wird und der erste Bereich ein Impulscodemodulations-Bereich und der zweite Bereich ein Untercode-Bereich ist.

4. Suchverfahren nach Anspruch 1, Anspruch 2 oder Anspruch 3, wobei ein Zielzählwert und ein vom Aufzeichnungsmedium (15) reproduzierter Einheitszählwert miteinander verglichen werden, wobei die Richtung und die Geschwindigkeit des Aufzeichnungsmediums in Übereinstimmung mit dem Ergebnis des Vergleichs gesteuert werden, und dann, wenn der vom Aufzeichnungsmedium reproduzierte Zählwert dem Zielzählwert nahekommt, das Mitteilungssignal erzeugt wird, nachdem eine Unterteilung des Einheitszählsignals erfaßt wurde.

5. Vorrichtung zum Aufsuchen bei einem Aufzeichnungsmedium (15), auf dem eine Mehrzahl von Positionssignalen (GPC) in Intervallen aufgezeichnet sind, welche aufweist:
eine Antriebsvorrichtung (14), um das Aufzeichnungsmedium (15) anzutreiben;
eine Erfassungsvorrichtung zur Erfassung der aufgezeichneten Positionssignale (GPC) und
eine Steuerungsvorrichtung (13) zur Steuerung der Antriebsvorrichtung (14) in Abhängigkeit von der Erfassungsvorrichtung, wobei die Steuerungsvorrichtung (13) die Antriebsvorrichtung derart betreibt, daß:
a) das Aufzeichnungsmedium (15) anfänglich in einer Richtung angetrieben wird, während die aufgezeichneten Positionssignale (GPC) von einer relativ zum Aufzeichnungsmedium (15) festen Position erfaßt werden;
b) die Bewegungsrichtung des Aufzeichnungsmediums (15) umgekehrt wird, nachdem ein vorbestimmtes aufgezeichnetes Positionssignal erfaßt wurde;
c) die Geschwindigkeit des Aufzeichnungsmediums (15) verringert wird und das Aufzeichnungsmedium (15) mit der verringerten Geschwindigkeit bewegt wird, bis das vorbestimmte aufgezeichnete Positionssignal wieder erfaßt wird;
d) die vorangegangenen Schritte b) und c) eine vorbestimmte Anzahl von Wiederholungen wiederholt werden, so daß die Zielposition auf dem Aufzeichnungsmedium (15) erfaßt wird und
daß, nachdem erfaßt wurde, daß die Zielposition während des letzten der vorbestimmten Zahl der vorangegangenen Schritte passiert wurde, ein Mitteilungssignal erzeugt wird, das anzeigt, daß die Zielposition aufgesucht worden ist;
*dadurch **gekennzeichnet,*** daß
das Mitteilungssignal erzeugt wird, während das Aufzeichnungsmedium (15) sich noch während des letzten Erfassungsschritts bewegt, so daß das Aufzeichnungsmedium (15) angehalten wird, wenn kein Befehlssignal innerhalb einer vorbestimmten Zeitspanne, nachdem das Mitteilungssignal erzeugt wurde, empfangen wird.

## Revendications

1. Procédé de recherche destiné à être utilisé avec un support d'enregistrement (15) sur lequel une pluralité de signaux de position (GPC) sont enregistrés selon certains intervalles, le procédé comprenant les étapes de :
a) entraînement du support d'enregistrement (15) initialement selon un certain sens tout en détectant les signaux de position enregistrés (GPC) par rapport à une position qui est fixe par rapport au support d'enregistrement (15) ;
b) inversion du sens d'entraînement du support d'enregistrement (15) après qu'un signal de position enregistré prédéterminé a été détecté ;
c) diminution de la vitesse du support d'enregistrement (15) et entraînement du support d'enregistrement (15) à la vitesse diminuée jusqu'à ce que le signal de position enregistré prédéterminé soit détecté à nouveau ;
d) répétition des étapes précédentes b) et c) un nombre prédéterminé de fois de manière à détecter une position cible sur le support d'enregistrement (15) ; et
après détection du fait que la position cible a été passée pendant l'étape finale du nombre prédéterminé d'étapes précédentes, génération d'un signal de rapport indiquant que la position cible a été trouvée,
caractérisé en ce que le signal de rapport est généré tandis que le support d'enregistrement (15) se déplace encore pendant l'étape de détection finale de telle sorte que le support d'enregistrement (15) soit arrêté si aucun signal de commande n'est reçu pendant une durée prédéterminée après que le signal de rapport a été généré.

2. Procédé de recherche selon la revendication 1, dans lequel des données sont enregistrées dans une pluralité d'unités sur le support d'enregistrement (15) et dans lequel des données principales sont enregistrées dans une première zone, dans chaque unité située sur le support d'enregistrement et un signal de comptage d'unités ainsi que d'autres signaux de comptage sont enregistrés dans une seconde zone, dans chaque unité.

3. Procédé de recherche selon la revendication 2, dans lequel un enregistreur à bande audionumérique (1) est utilisé pour effectuer la recherche, la première zone est une zone de modulation par impulsions et codage et la seconde zone est une zone de sous-code.

4. Procédé de recherche selon la revendication 1, 2 ou 3, dans lequel une valeur de comptage cible et une valeur de comptage d'unités reproduite à partir du support d'enregistrement (15) sont comparées l'une à l'autre, le sens et la vitesse du support d'enregistrement sont commandés en relation avec la sortie de comparaison et lorsque la valeur de comptage reproduite à partir du support d'enregistrement devient proche de la valeur de comptage cible, le signal de rapport est généré après détection d'une division du signal de comptage d'unités.

5. Appareil pour effectuer une recherche sur un support d'enregistrement (15) sur lequel une pluralité de signaux de position (GPC) sont enregistrés selon certains intervalles, l'appareil comprenant :
un moyen d'entraînement (14) pour entraîner le support d'enregistrement (15) ;
un moyen de détection pour détecter les signaux de position enregistrés (GPC) ; et
un moyen de commande (13) pour commander le moyen d'entraînement (14) en réponse au moyen de détection, le moyen de commande (13) pouvant être actionné pour forcer le moyen d'entraînement à :
a) entraîner initialement le support d'enregistrement (15) selon un certain sens tout en détectant les signaux de position enregistrés (GPC) par rapport à une position qui est fixe par rapport au support d'enregistrement (15) ;
b) inverser le sens d'entraînement du support d'enregistrement (15) après qu'un signal de position enregistré prédéterminé a été détecté ;
c) diminuer la vitesse du support d'enregistrement (15) et entraîner le support d'enregistrement (15) à la vitesse diminuée jusqu'à ce que le signal de position enregistré prédéterminé soit détecté à nouveau ;
d) répéter les étapes précédentes b) et c) un nombre prédéterminé de fois de manière à détecter une position cible sur le support d'enregistrement (15) ; et
après détection du fait que la position cible a été passée pendant l'étape finale du nombre prédéterminé d'étapes précédentes, générer un signal de rapport indiquant que la position cible a été trouvée,
caractérisé en ce que le signal de rapport est généré tandis que le support d'enregistrement (15) se déplace encore pendant l'étape de détection finale de telle sorte que le support d'enregistrement (15) soit arrêté si aucun signal de commande n'est reçu pendant une durée prédéterminé après que le signal de rapport a été généré.
